# EUROPEAN PATENT SPECIFICATION

(11) **EP 1 470 200 B1**
(45) Date of publication and mention of the grant of the patent: **16.11.2005**
(21) Application number: 03711869.2
(22) Date of filing: 28.01.2003
(51) Int. Cl.: C09D 167/08

(54) **REACTIVE DILUENTS AND COATINGS COMPRISING THEM**
REAKTIVVERDÜNNER UND BESCHICHTUNGEN, DIE DIESE ENTHALTEN
DILUANTS REACTIFS ET REVETEMENTS COMPRENANT CES DILUANTS

(30) Priority: 30.01.2002 EP 02447014
(43) Date of publication of application: 27.10.2004
(73) Proprietor: SIGMA COATINGS B.V., 1422 AD Uithoorn (NL)
(72) Inventor: OOSTVEEN, Everardus, Arnoldus, NL-6700 AA Wageningen (NL); WEIJNEN, John, NL-2408 NT Alphen aan den Rijn (NL); VAN HAVEREN, Jacco, NL-6700 AA Wageningen (NL); GILLARD, Michel, B-1348 Louvain-La-Neuve (BE)
(74) Representative: Brants, Johan P.E.
(86) International application number: PCT/EP2003/000854
(87) International publication number: WO 2003/064548

(56) References cited:
- US-A- 2 970 142
- US-A- 4 689 266
- US-A- 4 798 859
- US-A- 5 064 892

## Description

### FIELD OF THE INVENTION

The present invention relates to the use of fatty acid modified carbohydrate completely obtainable from renewable sources as reactive diluents for coatings such as paint, varnish or woodstain. The present invention also relates to coatings comprising said reactive diluents, more in particular to alkyd coatings.

### BACKGROUND OF THE INVENTION

Alkyds are long-established binders for film-forming coating compositions acknowledged for their esthetical properties, a low surface tension, which enables the wetting of and adhesion on a wide variety of substrates and facilitates pigment wetting, can be applied by various techniques, bring about a long-lasting film with adequate protective properties under moderate service life conditions and are cost-effective. The importance of alkyd binders for the coating industry is still unambiguous. The environmental burden and health problems caused by solvent emission imposes the development of high solids or even solvent free coatings. One way of increasing the solids content of coating formulations is to replace volatile solvents by reactive diluents in the resins compositions. The reactive diluents reduce the viscosity of the paint during application but are, unlike a conventional solvent, subsequently incorporated into the polymeric network.

The concept of reactive diluents is known in the art of high solids paints (see e.g. Chapter 6 in High Solids Alkyd Resins, K. Holmberg, Dekker, 1987). WO 97/02326 discloses the use of octadienyl maleates, fumarates and succinates as reactive diluents in high solids alkyd formulations. EP 0 685 543 A2 describes the use of alkyl esters derived from the acid of an unsaturated vegetable oil in a coating composition containing an alkyd and a reactive diluent. WO 95/12641 discloses a high solids binder comprising a conventional alkyd resin and a reactive diluent produced from a polyhydric alcohol, a polyisocyanate and unsaturated fatty acids. Reactive diluents and also alkyd prepolymers are partly derivable from agricultural products, which are evidently from renewable sources.

An alkyd binder should have a high molecular weight to ensure fast drying behaviour and to form an adequate protective film. On the other hand, the molecular weight of the binder should be small to grant a low intrinsic viscosity and to minimise the solvent content of the coating formulation. Reactive diluents are a well-known tool to increase the solids content of a coating composition. A reactive diluent for oxidative drying alkyd systems must meet the following requirements: a low intrinsic viscosity and a good compatibility with alkyd binders to ensure a fast viscosity cutting behaviour, a low volatility to prevent evaporation before curing, no toxic effects of the reactive diluent and possible decomposition products, the number and types of reactive sites in the molecule must correspond that of the high molecular binder to enable cross linking into the polymeric alkyd network, no untimely cross linking to prolong the shelf-life of the coating composition and no detrimental effects on the film properties as deficient hardness development, haziness of the film and an increased tendency to yellow or to wrinkle.

It is a main object of the present invention to provide reactive diluents that are used in coatings, which meet one or more of the above requirements. It is a further object to provide coatings comprising reactive diluents in combination with conventional autoxidisable long-oil or medium-oil alkyd resins and are completely obtainable from renewable sources. It is another object to provide coatings based on alkyd binder and reactive diluent wherein the drying characteristics and film performance of said coating is on the same level compared to conventional alkyd paints and wherein the solids content is substantially increased.

### SUMMARY OF THE INVENTION

In a first aspect, the present invention relates to the use of a fatty acid modified carbohydrate obtainable by reaction of: (i) at least one carbohydrate or an acyl ester thereof; and (ii) a fatty acid, an alkyl ester thereof or a derivative thereof, as reactive diluent in a coating. According to an embodiment, the present invention relates to the use as reactive diluent of fatty acid modified carbohydrate wherein the free OH groups of said carbohydrate are further acetylated after reaction with said fatty acid, alkyl ester thereof or derivative thereof.

In a second aspect the present invention relates to coatings comprising at least one binder and as a reactive diluent a fatty acid modified carbohydrate obtainable by reaction of: (i) at least one carbohydrate or an acyl ester thereof; and (ii) a fatty acid, an alkyl ester thereof or a derivative thereof.

### DETAILED DESCRIPTION

The term "acyl" as used herein, refers to an alkyl group attached to a carbon-oxygen double bond. More in particular acyl as used herein refers to a radical of formula R¹CO- wherein R¹ represents an alkyl.

The term "alkyl" as used herein, alone or in combination, means straight and branched chained saturated hydrocarbon radicals containing from 1 to 6 carbon atoms, preferably from 1 to 4 carbon atoms, more preferably 1 to 2 carbon atoms. Examples of such radicals include methyl, ethyl, n-propyl, isopropyl, n-butyl, isobutyl, sec-butyl, tert-butyl, 2-methylbutyl and the like.

The term "carbohydrate" as used herein includes monosaccharides, oligosaccharides and polysaccharides as well as substances derived from monosaccharides by reduction of the carbonyl group such as alditols, by oxidation of one or more terminal groups to carboxylic acids, or by replacement of one or more hydroxy group(s) by a hydrogen atom, an amino group, a thiol group or similar heteroatomic groups. It also includes derivatives of these compounds.

According to an embodiment, said acyl ester of carbohydrate is a lower acyl ester, wherein "lower" as used herein refers to C₁₋₄ carbon atoms. Suitable acyl ester of carbohydrate are acetate, propionate ester and the like. According to another embodiment, said alkyl ester of fatty acid is a short chain alkyl ester, wherein "short-chain" as used herein refers to C₁₋₆ carbon atoms. Suitable short chain alkyl ester of said fatty acids are methyl ester, ethyl ester and the like.

For the preparation of the fatty acid modified carbohydrates for use according to the invention, the reaction of the carbohydrate or acyl ester thereof with the fatty acid, alkyl ester thereof or derivative thereof, may be performed according to various methods. Non limiting examples of these methods include: transesterification of the carbohydrate with fatty acid esters using a variety of catalysts; acylation of the carbohydrate with a fatty acid chloride; acylation of the carbohydrate with a fatty acid anhydride; and acylation of the carbohydrate with the desired acid, per se. (See, for example, U.S. Pat. Nos. U.S. Pat. No. 2,831,854, U.S. Pat. No. 3,600,186, U.S. Pat. No. 3,963,699, U.S. Pat. No. 4,517,360 and U.S. Pat. No. 4,518,772, all of which are incorporated by reference. These patents disclose suitable methods for preparing polyol fatty acid polyesters). More suitably said method can be either direct- trans- or inter-esterification reaction.

According to another embodiment, the fatty acids modified carbohydrate for use according to the invention may be obtained - by the reaction of: (i) at least one carbohydrate and (ii) a fatty acid, an alkyl ester thereof or a derivative thereof, and by the further acetylation of the product of this reaction with for example acetic anhydride.

In an embodiment of the present invention, the fatty acids modified carbohydrate for use in accordance with the invention can be obtained by transesterification of: (i) at least one carbohydrate; and (ii) an alkyl ester of fatty acids or a derivative thereof. Optionally the product of this transesterification reaction can be further acetylated with for example acetic anhydride.

According to another embodiment, the fatty acids modified carbohydrate to be used according to the invention may be obtained by interesterification of: (i) at least one carbohydrate acyl ester; and (ii) an alkyl ester of fatty acids or a derivative thereof.

According to another embodiment, the fatty acids modified carbohydrate to be used according to the invention may be obtained by esterification of: (i) at least one carbohydrate; and (ii) a fatty acid or a derivative thereof.

Suitable reactive diluents for use in accordance with the invention are those obtained by interesterification or transesterification of a carbohydrate or acyl ester thereof and a mixture of alkyl esters of drying or semi-drying fatty acids. The interesterification reaction is suitably carried out in the presence of a catalyst, for example a base, and in an inert atmosphere (e.g. nitrogen or carbon dioxide) and optionally under reduced pressure at elevated temperatures, for example from about 60 to 140 °C, preferably from 80 to 120 °C. Alternatively, the esters may be obtained by a transesterification reaction in a polar aprotic solvent and in an inert atmosphere and optionally under reduced pressure. Suitable catalysts include K₂CO₃, Na₂CO₃, LiOH and NaOMe. The transesterification is suitably carried out at a temperature from 100 to 165 °C and preferably from 140 to 165 °C. The free OH groups of the resulting mixtures may be further acetylated by an additional reaction with for example acetic anhydride, optionally in the presence of a catalyst such as anhydrous sodium acetate, zinc chloride or pyridine.

Suitable reactive diluents for use in accordance with the invention may also be obtained by direct esterification of a carbohydrate with fatty acid, in a suitable solvent such as tertiary amines, amides or dimethyl sulfoxide, and in presence of an alkali catalyst. The esterification may be carried at temperatures between 20 to 180°C. The resulting mixtures may be further acetylated with acetic anhydride in the presence of a catalyst such as anhydrous sodium acetate or zinc chloride or pyridine.

The carbohydrate or acyl ester thereof moiety of the reactive diluent to be used may be composed of 1 to 6 carbohydrate units. According to an embodiment said carbohydrate constituent is composed of 2 to 4 carbohydrates units. Suitable carbohydrates include but are not limited to mono- oligo and poly-saccharides. Examples of such carbohydrates include, for instance adonitol, arabitol, sorbitol, mannitol, galactitol, isomalt, lactitol, xylitol, maltitol, 1-methyl-glucopyranoside, 1-methyl-galactopyranoside, 1-methyl-mannopyranoside, sucrose, nystose, kestose, trehalose, raffinose, gentianose or mixture thereof.

The degree of substitution is defined as the number of acylated hydroxyl groups of the mono- oligo or poly-saccharide of the carbohydrate moiety. The ratio of free and esterified hydroxyl groups has an important role on the performance of the reactive diluent. Substitution levels of up to about 50% of the carbohydrate hydroxyl groups generate a product with a consistency that ranges from solid to syrupy. The degree of substitution of the carbohydrate moiety is suitable in the range of 50 to 100% and preferably in the range of 75 to 100%.

The fatty acids, alkyl ester thereof or a derivative thereof suitable herein are non-drying, semi-drying and drying fatty acids. By non-drying, semi-drying and drying fatty acids is meant fatty acids that have the same aliphatic chain composition as the oils they are derived from. The classification of the oils is based on the iodine number; for drying oil the iodine number is >140; for semi-drying oil the iodine number is ranging between 125 and 140, and for non-drying oil the iodine number is <125 ("Surface Coatings", by Swaraj Paul, John Wiley and Sons; p.89). In an embodiment said fatty acid, alkyl ester thereof or a derivative thereof suitable herein are preferably unsaturated. Unsaturated fatty acids moiety finding use herein are ethylenically unsaturated conjugated or non conjugated long chain, having at least 6 carbon atoms, typically at least 10 carbon atoms, more typically about 10 to about 24, preferably about 16 to about 22 carbon atoms and most preferably about 18 to about 20. According to an embodiment suitable autoxidisable fatty acids, alkyl ester thereof or derivative thereof may have an iodine number of at least 100 and preferably between 100 and 140 expressed in terms of the number of centigrams of iodine per gram of fatty acids (e.g. ASTM test method D-1959). Typical but non-limiting examples of unsaturated fatty acids useful in the preparation of the reactive diluent to be used according to the invention are: safflower fatty acid, tall oil fatty acid, calendula oil fatty acid veronia oil fatty acid, rapeseed oil fatty acid peanut oil fatty acid, soya bean oil fatty acid, tung oil fatty acid, linseed oil fatty acid, sardine oil fatty acid, herring oil fatty acid, sesame oil fatty acid, tallow oil fatty acid, sunflower oil fatty acid, cottonseed oil fatty acid, and mixtures thereof.

Suitable parameters for defining the reactive diluent for use in accordance to the invention, include but are not limited to the viscosity of said reactive diluent, its number average molecular weight (Mn), its polydispersity and its viscosity cutting behaviour. For example, the fatty acid modified carbohydrate for use according to the invention has a viscosity of less than 30 dPa.s at 23°C and typically less than 20 dPa.s at 23°C. Other suitable viscosity is less than 15 dPa.s and preferably less than 15 dPa.s.

Furthermore, the fatty acid modified carbohydrate for use as reactive diluents in accordance with the invention typically have a number average molecular weight (Mn) ranging from 500 to 10000 and preferably from 1100 to 6200. According to an embodiment said fatty acid modified carbohydrate have a number average molecular weight ranging from 2400 to 4300.

According to another embodiment, said fatty acid modified carbohydrate may have a polydispersity ranging from 1 to 3, and preferably in the range of 1.1 to 1.3.

Said fatty acid modified carbohydrates for use as reactive diluent exhibit a good balance of a relatively low viscosity and a molecular weight that is high enough not to decelerate the curing process, are completely derived from renewable materials and show a fast thinning down behaviour and therefore may be used as reactive diluents in a wide variety of polymer formulations such as paints and varnishes, especially for formulations comprising alkyd resins.

The fatty acid modified carbohydrate for use in accordance with the invention are generally suitable as reactive diluent for any chemically curing binders or binder compositions, for example, those described by H. G. Elias in Makromolekule, 3rd Edition (1975), pages 715 et seq., Huthig und Wepf-Verlag, Basel/Heidelberg; in Houben-Weyl, Methoden der organischen Chemie, Makromolekulare Stoffe, Teilbande 2 und 3, pages 689-2237 (1987), 4th Edition, Georg Thieme Verlag Stuttgart/New York; or by H. Wagner and H. F. Sarx in Lackkunstharze, Carl Hanser Verlag Munchen (1971), 5th Edition.

In another aspect, the present invention relates to coatings comprising at least one binder and as a reactive diluent a fatty acid modified carbohydrate obtainable by reaction of: (i) at least one carbohydrate or an acyl ester thereof; and (ii) a fatty acid, an alkyl ester thereof or a derivative thereof. According to an embodiment, the present invention relates to coatings comprising at least one binder and as a reactive diluent a fatty acid modified carbohydrate wherein the free OH groups of said carbohydrate are further acetylated after reaction with said fatty acid, alkyl ester thereof or derivative thereof.

According to another embodiment, the reactive diluents for use in said coatings are preferably combined with autoxidisable alkyd resins. Alkyd resins are in general the reaction product of the esterification of polyhydric alcohols with polybasic acids (or their anhydrides) and fatty acids (or glycerol esters thereof). Alkyd resins are well-known in the art and need not to be further described herein. The properties are primarily determined by the nature and the ratios of the alcohols and acids used and by the degree of condensation. Suitable alkyd resins include long oil and medium oil resins e.g. derived from 45 to 70 wt.% of fatty acids. Moreover, the application of reactive diluents is not limited to plain alkyd resins. To improve the performance of the resins, the composition of the long oil and medium oil alkyd may be modified. For example, polyurethane alkyds, silicone alkyds, styrene alkyds, (meth)acrylic modified alkyds, vinylated alkyds, polyamide modified alkyds, and epoxy esters are also suitable resins to be combined with the reactive diluents.

In another embodiment; the present invention relates to a coating comprising: (i) as binder, at least one conventional air-drying or semi-drying long-oil or medium-oil alkyd resin, (ii) a fatty acid modified carbohydrate as described above as reactive diluent and (iii) at least one drier.

The ratio of the reactive diluent of the present invention to the alkyd resin is suitably in the range from 2 to 50 : 98 to 50 parts by weight, preferably from 5 to 40 : 95 to 60 and more preferably from 10 to 30 : 90 to 70 parts by weight.

The coating composition according to the invention can be prepared by mixing the reactive diluent for use according to the invention with, for example, at least one conventional air-drying or semi-drying long-oil or medium-oil alkyd resin, in a manner known in the art.

The invention also relates to coating compositions having a VOC content below 225 g/l, and preferably below 200 g/l.

The blends of air-drying or semi-drying long-oil or medium-oil alkyd resins and reactive diluents may be formulated into coating compositions by mixing and, if appropriate, dispersing and grinding with a liquid carrier and at least one drier and optionally pigments, filler/extenders and corrective and constructive additives.

Suitable organic solvents as liquid carrier in the compositions of the invention include aliphatic, cycloaliphatic and aromatic hydrocarbons, alcohol ethers, alcohol ether esters, alcohol esters and mixtures thereof. Typical but non-limiting examples are: white spirits, dearomatised white spirits, higher flash point white spirits, isoparafins, butyl glycol, butyl diglycol, propylene glycol mono methyl ether and dipropylene glycol mono methyl ether. Mixtures of solvents may also be used. The solvent is typically present as about 10 to about 20 wt% and preferably about 10 to about 15 wt%. However, it may also be an aqueous carrier, including a suitable emulsifier, containing the resin composition in the form of an emulsion.

The polymerisation of the air-drying compositions in accordance with the invention is accelerated by so-called driers or siccatives. Examples of suitable driers are salts of (cyclo)aliphatic, natural or synthetic acids, such as, for example, linoleic acid, naphtenic acid, 2-ethyl-hexanoic acid and neodecanoic acid of various metal like cobalt, manganese, iron, lead, zirconium, strontium, aluminium, calcium, barium, bismuth, zinc, lithium and potassium. Driers are subdivided into primary driers exhibiting more than one oxidation number, co-ordination driers and auxiliary driers. To suppress the catalytic activity of the primary metal driers and to preclude untimely oxidation, an anti-skinning agent such as methyl ethyl ketoxime, n-butyl ketoxime and cyclohexane ketoxime may be present in the coating composition.

The optional colorant component of the coating composition comprises one or more inorganic or organic, transparent or non-transparent pigments. Non-limiting examples of such pigments are titanium dioxide, iron oxides, carbon black, mixed metal oxides, mono-azo and di-azo pigments, copper phthalocyanines and anthraquinones. Suitable extenders are, for instance, calcium carbonate, barium sulphate, kaolin, talc, diatomaceous earth, mica and zinc oxide.

In addition to the above-mentioned components, these coating compositions in accordance with the invention may contain one or more supporting additives. Non-limiting examples of such materials include: pigment and substrate wetting agents, anti-sagging agents, anti-oxidants, bactericides, fungicides, insecticides, foam suppressing agents, slip agents, flow and levelling agents, UV-absorbers, HALS-radical scavengers, corrosion inhibitors, matting agents, waxes, flame retardants, loss of dry inhibitors, optical brighteners, adhesion promoters and anti-crater additives.

These coating compositions comprising the reactive diluents according to the invention may be used, for example, for coating wood, plastics, leather, textiles, glass, ceramic or metals. They may be applied by any of the known methods, such as spraying, brushing, flooding, casting, dipping and rolling.

The invention is illustrated in the tables 1-3.

### EXAMPLES

### Test methods employed

The following properties have been measured for some or all paint exemplified hereafter:

The low shear paint viscosity was measured with a HAAKE VT500 viscosimeter using a cylindrically shaped e E30 spindle at rotation speed of 179 rpm and at 23 °C.

High shear paint viscosity was measured in, accordance with the ICI cone & plate method (ASTM D 4287) at a shear rate of 10000 s⁻¹ in dPa.s.

The solids content and VOC level of the formulations are calculated from the percentage solids material of the distinct components and the specific gravity of the solvent used.

The drying stages of the paint formulations were assessed using a BK-drying recorder (Sheen instruments Ltd). A 150 µm wet paint layer is applied on a glass strip 30.5 x 2.5 cm. A vertical blunt needle is positioned into the freshly applied film by a 5 g load and then dragged through the drying paint at a speed of 24.4 mm/h in a direction parallel to the length of the coat.

Wrinkling was determined by visual evaluation of the dried film subsequent to applying a wet layer thickness of 300 µm on glass panels. Results are reported according to the "Sigma scale" were 0 indicates a completely smooth film and 5 means severe wrinkling over the total film surface.

The elasticity of the paint film is assessed using the Erichsen cupping test according to ISO 1520. Using a mechanically driven indenter and a lens, the depth of indentation at which the coating starts to crack is established.

The gloss level of a paint film was measured after 24 hours of drying with a Dr. Lange Refo 3 reflectometer in accordance with ISO 2813.

The levelling rating was appraised by the extent of fading of the brush marks upon application and the smoothness of the dried surface. The levelling rating is established by means of a notation scale, from 1 (good levelling) to 5 (poor levelling).

To evaluate the yellowing tendency of the formulations, an accelerated method is used which is described in the *American Paint & Coating Journal, January 17, 1994, page 44.* For this test, a wet paint film was applied on the reverse side of a Lenata Form 2A to prevent absorption of the ammonia by the paper. After seven days of drying, the coated section of the charts was cut out and taped on the inside of a pail. Ten drops of 25% ammonia were placed in a small watch glass on the bottom of the pail and the lid was closed. The panels were removed after six hours of ammonia exposure and the colour was determined within 5 minutes. The whiteness of a paint film is measured by using the Cie-lab algorithm, before and after 6 hours of exposition to an ammonia atmosphere.

The adhesion of the paint films on spruce and aged alkyds was determined according to the cross-hatch method (ISO 2409) and the cross cut test (ASTM D3359). On the substrates, a 100 µm thick wet paint film was applied and dried for 1 week under ambient conditions. After 1 week, incisions in the film were made and the adhesion was tested by the tape pull-off method. The adhesion rating is established by means of a notation scale, from 0 (very good adhesion) to 5 (poor adhesion).

The gloss retention of the paint films under conditions of artificially accelerated weathering was established in a QUV-A cabinet (QUV Q-Panel) according to ASTM G 53. The paint was applied on aluminium Q-panel, aged for 3 weeks under ambient conditions and afterwards exposed to a cycle of 4 hours UV-A light and 4 hours of condensation with demineralised water in the absence of UV-light. The gloss readings at angle 60 ° were monitored for at least 6 weeks, and are presented in table 3.

For relative properties, a notation scale was used, from 1 (good) to 5 (bad).

### Analytical methods employed:

The molecular weight distribution was determined by Gel Permeation Chromatography (GPC apparatus from Millipore) using THF as solvent, 3 columns of Plgel 5mm, mixed-D from Polymer laboratories, calibration curve with commercial polystyrene standards.

The acid value was measured according to ASTM method D 1980-87 and the value is expressed in mg KOH/g

The hydroxyl value was measured according to ASTM method D 1957-86 and the value is expressed in mg KOH/g

The degree of substitution (DS) is the sucrose functionalities which are substituted; it was established by quantitative ¹³C NMR, using a Bruker DPX 300 spectrometer.

Unless specified, all reactants are commercially available from Acros Organics or Merck.

FAME is the abbreviation for fatty acid methyl ester

### Example 1

### Preparation of sorbitol linoleate

In a suitable reactor, the following were added:
940 pbw of N,N-'dimethylacetamide;
91 pbw of sorbitol;
734 pbw of safflower FAME (Radia 30139, from Oleon);
8.3 pbw of potassium carbonate.

The mixture was heated at a temperature of 160-165°C under a stream of nitrogen. After 9 hours, the solvent and any remaining methanol were distilled under reduced pressure (20 Pa). The resulting product was dissolved in petroleum ether (PE) (boiling point: 40-60°C) and treated with 1.2 equivalent hydrogen peroxide (2 % aqueous solution; 1 mol per mol of inulin) during two hours at a temperature of 15-20°C.

The resulting reactive diluent had the following properties:
safflower FAME content: about 15 mol%
degree of substitution: about 5
polydispersity: 1.1
number-average molecular weight: 1.1 x 10³
viscosity: < 1 dPa.s at 23°C.

### Example 2: Sucrose octalinoleate

### Preparation of the reactive diluent

In a suitable reactor, the following were added:
150 parts by weight (pbw) of sucrose octaacetate;
521.3 pbw of safflower FAME (Radia 30139, from Oleon)

The mixture was heated at a temperature of 75 - 80 °C at reduced pressure for about 15 minutes. Then - under a stream of nitrogen - 7.5 pbw of sodium methoxide were added. Under vacuum (20 - 30 mBar) the temperature of the reaction mixture was raised to 110 - 115 °C. After a few minutes the reaction started. Due to the formation of methyl acetate the pressure in the reactor increased temporarily to about 50 -150 mBar. Heating was continued at reduced pressure and a temperature of 110 - 115 °C for period of 8 hours under the concomitant distillation of the volatiles. After cooling to about 40 °C the reaction mixture was quenched by the addition of 40 pbw of glacial acetic acid. To the resulting mixture consecutively were added 1.6 L PE (Bp.: 40 - 60 °C) and 0.4 L methanol. After separation of the methanol layer the PE layer was washed five times with methanol (about 200 ml).

The reactive diluent obtained after evaporation of the volatiles' had the following properties:
degree of substitution (linoleate): 8
safflower FAME content: 5 %
hydroxyl value: 14.6
acid value: 2.3
polydispersity: 1.1
number-average molecular weight: 2.7 x 10³
viscosity: 1.8 dPa.s at 23 °C.

### Example 3: Methyl glucoside tetralinoleate

### Preparation of the reactive diluent

In a suitable reactor, the following were added:
100 parts by weight (pbw) of 1-methyl-2,3,4,6-tetraacetyl-glucopyranoside;
322 pbw of safflower FAME (Radia 30139, from Oleon);

The mixture was heated at a temperature of 75 - 80 °C at reduced pressure for about 15 minutes. Then - under a stream of nitrogen - 8.8 pbw of sodium methoxide were added. Under vacuum (20 - 30 mBar) the temperature of the reaction mixture was raised to 110 - 115 °C. After a few minutes the reaction started. Due to the formation of methyl acetate the pressure in the reactor increased temporarily to about 50 -150 mBar. Heating was continued at reduced pressure and a temperature of 110 - 115 °C for period of 4 hours under the concomitant distillation of the volatiles. After cooling to about 40 °C the reaction mixture was quenched by the addition of 30 pbw of glacial acetic acid. To the resulting mixture consecutively were added 1.2 L PE (Bp.: 40 - 60 °C) and 0.3 L methanol. After separation of the methanol layer the PE layer was washed five times with methanol (about 100 ml).

The reactive diluent obtained after evaporation of the volatiles had the following properties:
degree of substitution (linoleate): 3.9
safflower FAME content: 15 %
hydroxyl value: 4.4
acid value: 2.5
polydispersity: 1.1
number-average molecular weight: 1.7 x 10³
viscosity: < 1 dPa.s at 23 °C.

### Example 4: 1-Kestose / Nystose linoleate

### Preparation of the reactive diluent

In a suitable reactor, the following were added:
425 parts by weight (pbw) of a mixture of 1-Kestose acetate (5 mol %) and Nystose acetate (95 mol %);
1122 pbw of safflower FAME (Radia 30139, from Oleon)

The mixture was heated at a temperature of 75 - 80 °C at reduced pressure for about 15 minutes. Then - under a stream of nitrogen - 42.5 pbw of sodium methoxide were added. Under vacuum (20 - 30 mBar) the temperature of the reaction mixture was raised to 110 - 115 °C. After a few minutes the reaction started. Due to the formation of methyl acetate the pressure in the reactor increased temporarily to about 50 -150 mBar. Heating was continued at reduced pressure and a temperature of 110 - 115 °C for period of 10 hours under the concomitant distillation of the volatiles. After cooling to about 40 °C the reaction mixture was quenched by the addition of 178 pbw of glacial acetic acid. To the resulting mixture consecutively were added 4.5 L PE (Bp.: 40 - 60 °C) and 0.7 L methanol. After separation of the methanol layer the PE layer was washed five times with methanol (about 500 ml).

The reactive diluent obtained after evaporation of the volatiles had the following properties:
degree of substitution (linoleate): 2.5
safflower FAME content: 5 %
hydroxyl value: 49.8
acid value: 8.4
polydispersity: 1.1
number-average molecular weight: 3.8 x 10³
viscosity: 7.5 dPa.s at 23 °C.

### Example 5: sucrose octa-calendulate

### Preparation of the reactive diluent

In a suitable reactor, the following were added:
101.6 parts by weight (pbw) of sucrose octaacetate;
358.6 pbw of Calendula FAME (mixture of calendic acid and linoleic acid), prepared via a sodium methoxide, alcoholysis of Calendula oil.

The mixture was heated at a temperature of 75 - 80 °C at reduced pressure for about 15 minutes. Then - under a stream of nitrogen - 6.5 pbw of sodium methoxide were added. Under vacuum (20 - 30 mBar) the temperature of the reaction mixture was raised to 110 - 115 °C. After a few minutes the reaction started. Due to the formation of methyl acetate the pressure in the reactor increased temporarily to about 50 -150 mBar. Heating was continued at reduced pressure and a temperature of 110 - 115 °C for period of 6 hours under the concomitant distillation of the volatiles. After cooling to about 40 °C the reaction mixture was quenched by the addition of 35 pbw of glacial acetic acid. To the resulting mixture consecutively were added 1. L PE (Bp.: 40 - 60 °C) and 0.4 L methanol. After separation of the methanol layer the PE layer was washed five times with methanol (about 100 ml).

The reactive diluent obtained after evaporation of the volatiles had the following properties:
degree of substitution: 8
calendula FAME content: 5 %
hydroxyl value: 17.2
acid value: 3.8
polydispersity: 1.3
number-average molecular weight: 2.7 x 10³
viscosity: 7 dPa.s at 23 °C.

### Example 6: sucrose linoleate

### Preparation of the reactive diluent

In a suitable reactor, the following were added:
1875 pbw of N,N-dimethylacetamide;
102.6 pbw of sucrose;
675 pbw of safflower FAME (Radia 30139, from Oleon);
20 pbw of potassium carbonate.

The mixture was heated at a temperature of 120-122°C under reduced pressure (2.4 x 10³ - 2.6 x 10³ Pa). After 17 hours, the solvent and any remaining methanol were further distilled off under reduced pressure (20 Pa). The resulting product was dissolved in petroleum ether (boiling point: 40-60°C) and treated with one equivalent hydrogen peroxide (3 % aqueous solution; 5 mol per mol of sucrose) during 45 minutes at a temperature of 20 - 25°C.The organic layer was separated and washed several times with methanol to remove the excess of safflower FAME.

The resulting reactive diluent obtained after the evaporation of the volatiles had the following properties:
safflower FAME content: 10-15 mol%
degree of substitution: 6
polydispersity: 1.1
number average molecular weight: 2.3 x 10³
viscosity: 3.5 dPa.s at 23°C.

### Example 7: sucrose linoleate acetate

### Preparation of the reactive diluent

### Transesterification

In a suitable reactor, the following were added:
1874 pbw of N,N-dimethylacetamide;
102.6 pbw of sucrose;
675 pbw of safflower FAME (Radia 30139, from Oleon);

The mixture was purged with a stream of nitrogen and heated at a temperature of about 70 °C for about 15 minutes. Then 20 pwb of potassium carbonate were added. Thereupon the temperature of the reaction was raised to 120-122 °C. Heating was continued at that temperature for a period of 20 - 24 hours under concomitant distillation of the volatiles (solvent and methanol). The remaining solvents were distilled off under reduced pressure. The residue thus obtained was dissolved in petroleum ether (PE) (boiling point: 40-60°C) and filtered through Celite. The residue obtained after the evaporation under reduced pressure of the volatiles was used in the next step without further purification.

### Acetylation:

In a suitable reactor, the following were added:
1125 pbw of N,N-dimethylacetamide
702 pbw of crude sucrose linoleate
3.6 pbw of sodium acetate.

To the resulting mixture was added 75 pbw of acetic anhydride at a temperature of 70 - 75 °C over a period of about 30 minutes (under a stream of nitrogen). Heating and stirring was continued for an additional period of 4 hours.

Thereupon the solvent, the excess of acetic anhydride and acetic acid were distilled off under reduced pressure (20 Pa). The residue obtained was dissolved in PE and filtered through Celite. The filtrate was washed consecutively with an aqueous chloride (10%) solution, water and methanol.

The resulting reactive diluent obtained after the evaporation of the volatiles had the following properties:
safflower FAME content: 5-10 mol%
degree of substitution (linoleate): 6
degree of substitution (acetate): 2
polydispersity: 1.1
number-average molecular weight: 2.6 x 10³
viscosity: 1.8 dPa.s at 23°C.

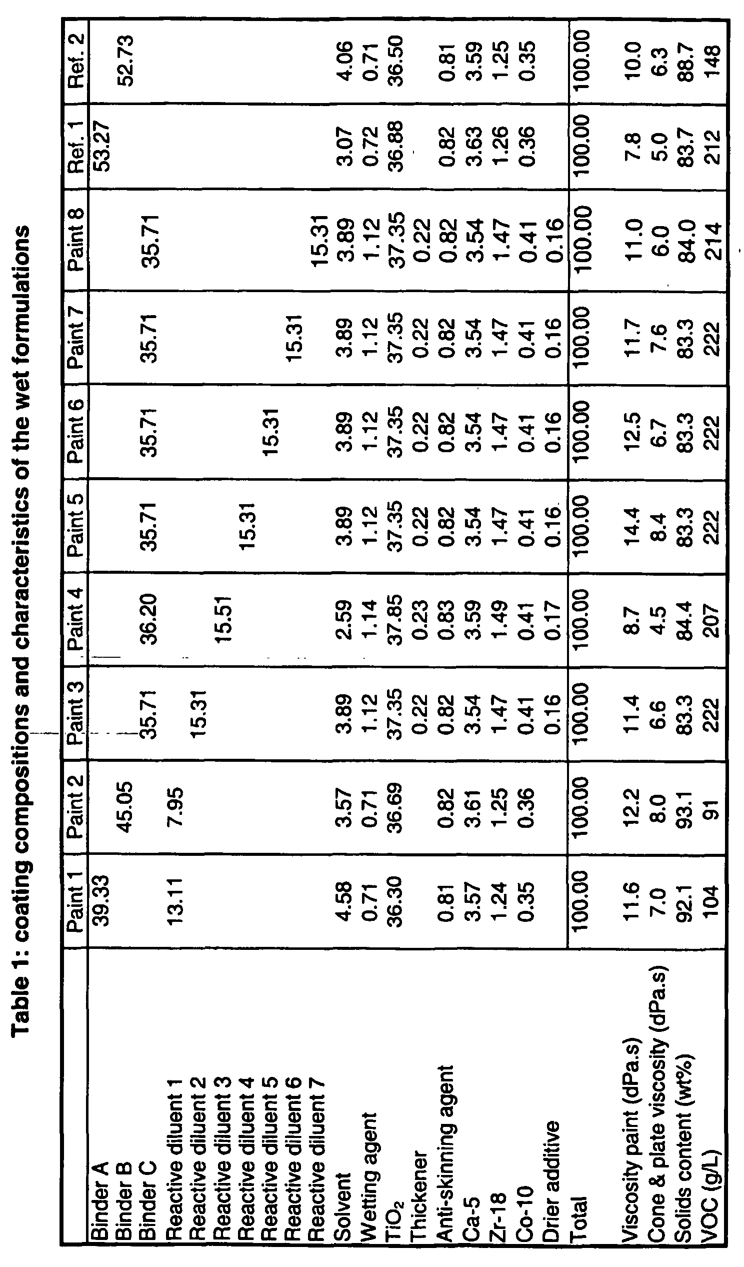

### Binder A: Preparation

In a suitable reactor, the following were added:
1500 parts by weight (pbw) of N,N-dimethylacetamide;
93.7 pbw of inulin (Raftlin HP, from Orafti);
270 pbw of safflower FAME, (Radia 30139, from Oleon);
15.2 pbw of potassium carbonate.

The mixture was heated at a temperature of, 160-165°C under a stream of nitrogen. After 6 hours, the solvent and any remaining methanol were distilled under reduced pressure. The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C.

The resulting binder had the following properties:
degree of substitution: 1.1
safflower FAME content: 12 mol %
polydispersity: 1.2
viscosity of a 81.5 wt % solution in ShellSol D40 solvent (from Shell): 60 dPa.s at 23 °C.

### Binder B: Preparation

In a suitable reactor, the following were added:
1800 pbw of N,N-dimethylacetamide;
113.7 pbw of inulin (Raftilin HP, from Orafti);
396 pbw of safflower FAME (Radia 30139, from Oleon);
18.5 pbw of potassium carbonate.

The mixture was heated at a temperature of 160-165°C under a stream of nitrogen. After 6 hours, the solvent and any remaining methanol were distilled off under reduced pressure (20 Pa). The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C.

The resulting binder had the following properties:
safflower FAME content: 18 mol%
degree of substitution: 1.3
polydispersity: 1.2
viscosity of a 92.5 wt% solution in ShellSol D40 solvent: 90 dPa.s at 23°C.

### Binder C

Binder C is a conventional alkyd, Air drying, long oil (64% oil) alkyd resin based on soya oil, pentaerythritol esterified; viscosity is 32-46 dPa.s at 23°C at a solid content of 77 % and the acid value is below 10 mg KOH/g.

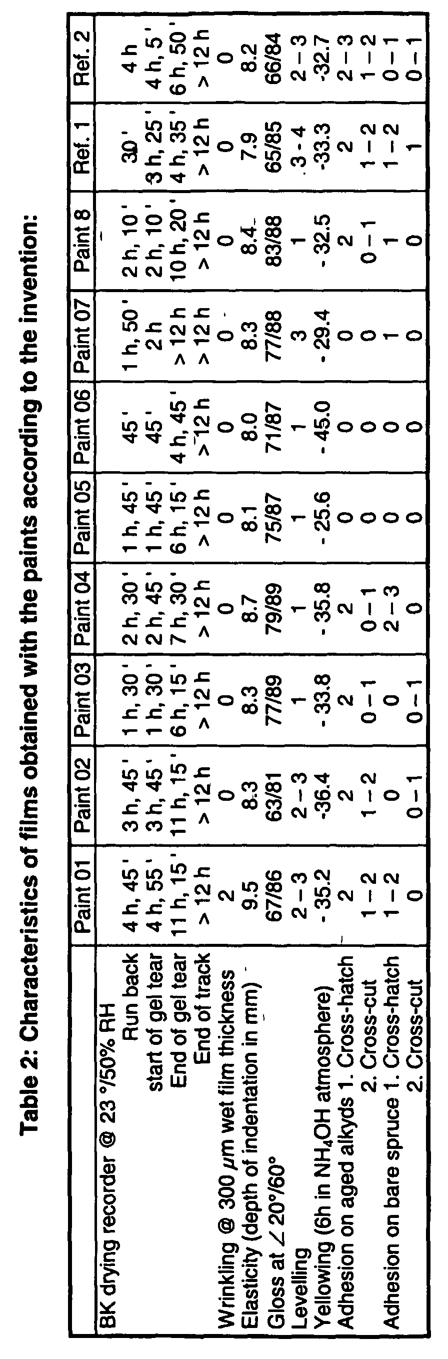

**Table 3:**

| **Gloss retention upon QUV-A weathering** | | | | | |
|---|---|---|---|---|---|
| | PAINT 3 | PAINT 4 | PAINT 5 | PAINT 6 | Ref. 3 |
| Initial | 83.2 | 85.0 | 82.5 | 82.7 | 82.2 |
| 168 h | 68.8 | 71.7 | 69.7 | 70.3 | 69.3 |
| 336 h | 62.5 | 66.8 | 65.1 | 67.3 | 68.2 |
| 504 h | 61.6 | 62.2 | 61.8 | 63.6 | 63.3 |
| 840 h | 61.2 | 65.3 | 63.8 | 65.7 | 62.2 |
| 1176 h | 62.8 | 65.2 | 62.7 | 66.9 | 64.9 |

Ref. 3 is a commercial available paint product based on binder C: It is an air-drying paint for outside and inside based on alkyd resins, with a VOC of 334.4 g/l.

As illustrated on Tables 1, 2 and 3, the paints according to the invention as good mechanical and physical properties as the reference paints.

Moreover, a paint formulated with binder C has a VOC around 350 g/l The effect of the reactive diluent is exemplified by the following: Blending binder C with reactive diluents according to the invention reduces the VOC to values below 250 g/l, without impairing the other properties of the paints.

## Claims

1. Use of a fatty acid modified carbohydrate obtainable by reaction of:
(i) at least one carbohydrate or an acyl ester thereof; and
(ii) a fatty acid, an alkyl ester thereof or a derivative thereof
as reactive diluent in a coating.

2. Use according to claim 1, wherein said fatty acid modified carbohydrate is obtained by transesterification of: '
(i) at least one carbohydrate; and
(ii) an alkyl ester of fatty acids or a derivative thereof.

3. Use according to claim 1, wherein said fatty acid modified carbohydrate is obtained by interesterification of:
(i) at least one carbohydrate acyl ester; and
(ii) an alkyl ester of fatty acids or a derivative thereof.

4. Use according to claim 1, wherein said fatty acid modified carbohydrate is obtained by esterification of:
(i) at least one carbohydrate; and
(ii) a fatty acid or a derivative thereof.

5. Use according to any of claims 1 to 4, wherein said fatty acid is unsaturated.

6. Use according to any of claims 1 to 5, wherein said fatty acid, alkyl ester thereof or derivative thereof has an iodine number of at least 100.

7. Use according to claim 6, wherein said fatty acid, alkyl ester thereof or derivative thereof have an iodine number ranging between 100 and 140.

8. Use according to any of claims 1 to 7, wherein said carbohydrate or acyl ester thereof is composed of 1 to 6 carbohydrate units.

9. Use according to any of claims 1 to 8, wherein said carbohydrate is selected from the group comprising adonitol, arabitol, sorbitol, mannitol, galactitol, isomalt, lactitol, xylitol, maltitol, 1-methyl-glucopyranoside, 1-methyl-galactopyranoside, 1-methyl-mannopyranoside, sucrose, nystose and kestose, trehalose, raffinose, gentianose or mixture thereof.

10. Use according to any of claims 1 to 9, wherein the free OH groups of the carbohydrate are further acetylated after reaction with said fatty acid, alkyl ester thereof or derivative thereof.

11. Use according to any of claims 1 to 10, wherein said fatty acid modified carbohydrate has a viscosity of less than 20 dPa.s at 23°C.

12. Use according to any of claims 1 to 11, in a paint.

13. Use according to any of claims 1 to 11, in a varnish.

14. Coating comprising at least one binder and as a reactive diluent a fatty acid modified carbohydrate obtainable by reaction of:
(i) at least one carbohydrate or an acyl ester thereof; and
(ii) a fatty acid, an alkyl ester thereof or a derivative thereof.

15. Coating according to claim 14, wherein the free OH groups of said carbohydrate are further acetylated after reaction with said fatty acid, alkyl ester thereof or derivative thereof.

16. Coating according to any of claims 14 or 15, comprising:
(i) as binder, at least one conventional air-drying or semi-drying long-oil or medium-oil alkyd resin,
(ii) said reactive diluent
(iii) at least one drier.

17. Coating according to claim 16, wherein the ratio of the reactive diluent to the alkyd resin is in the range from 2 to 50: 98 to 50 parts by weight.

## Patentansprüche

1. Verwendung eines Fettsäure-modifizierten Kohlenhydrats, erhältlich durch Reaktion von:
(i) mindestens einem Kohlenhydrat oder einem Acylester davon; und
(ii) einer Fettsäure, einem Alkylester davon, oder einem Derivat davon,
als reaktionsfähiges Verdünnungsmittel in einer Beschichtung.

2. Verwendung nach Anspruch 1, wobei das Fettsäure-modifizierte Kohlenhydrat erhalten wird durch Umesterung (*transesterification*) von:
(i) mindestens einem Kohlenhydrat; und
(ii) einem Alkylester von Fettsäuren oder einem Derivat davon.

3. Verwendung nach Anspruch 1, wobei das Fettsäure-modifizierte Kohlenhydrat erhalten wird durch Umesterung (*interesterification*) von:
(i) mindestens einem Kohlenhydratacylester; und
(ii) einem Alkylester von Fettsäuren oder einem Derivat davon.

4. Verwendung nach Anspruch 1, wobei das Fettsäure-modifizierte Kohlenhydrat erhalten wird durch Veresterung von:
(i) mindestens einem Kohlenhydrat; und
(ii) einer Fettsäure oder einem Derivat davon.

5. Verwendung nach einem der Ansprüche 1 bis 4, wobei die Fettsäure ungesättigt ist.

6. Verwendung nach einem der Ansprüche 1 bis 5, wobei die Fettsäure, der Alkylester davon oder ein Derivat davon eine Jodzahl von mindestens 100 hat.

7. Verwendung nach Anspruch 6, wobei die Fettsäure, der Alkylester davon oder ein Derivat davon eine Jodzahl zwischen 100 und 140 hat.

8. Verwendung nach einem der Ansprüche 1 bis 7, wobei das Kohlenhydrat oder der Acylester davon aus 1 bis 6 Kohlenhydrateinheiten zusammengesetzt ist.

9. Verwendung nach einem der Ansprüche 1 bis 8, wobei das Kohlenhydrat aus der Gruppe ausgewählt ist umfassend Adonit, Arabitol, Sorbit, Mannitol, Galaktitol, Isomalt, Lactitol, Xylit, Malitol, 1-Methyl-Glukopyranosid, 1-Methyl-Galaktopyranosid, 1-Methyl-Mannopyranosid, Saccharose, Nystose und Kestose, Trehalose, Raffinose, Gentianose oder ein Gemisch davon.

10. Verwendung nach einem der Ansprüche 1 bis 9, wobei die freien OH-Gruppen des Kohlenhydrats nach der Reaktion mit der Fettsäure, dem Alkylester davon oder einem Derivat davon weiter acetyliert sind.

11. Verwendung nach einem der Ansprüche 1 bis 10, wobei das Fettsäure-modifizierte Kohlenhydrat bei 23°C eine Viskosität von weniger als 20 dPA.s hat.

12. Verwendung nach einem der Ansprüche 1 bis 11 in einer Farbe.

13. Verwendung nach einem der Ansprüche 1 bis 11 in einem Lack.

14. Beschichtung, umfassend mindestens ein Bindemittel und als reaktionsfähiges Verdünnungsmittel ein Fettsäure-modifiziertes Kohlenhydrat, erhältlich durch Reaktion von:
(i) mindestens einem Kohlenhydrat oder einem Acylester davon; und
(ii) einer Fettsäure, einem Alkylester davon oder einem Derivat davon.

15. Beschichtung nach Anspruch 14, wobei die freien OH-Gruppen des Kohlenhydrats nach der Reaktion mit der Fettsäure, dem Alkylester davon oder einem Derivat davon weiter acetyliert sind.

16. Beschichtung nach einem der Ansprüche 14 bis 15, umfassend:
(i) mindestens ein gebräuchliches lufttrocknendes oder halbtrocknendes fettes oder halbfettes Alkydharz als Bindemittel,
(ii) das reaktionsfähige Verdünnungsmittel
(iii) mindestens ein Trockenmittel.

17. Beschichtung nach Anspruch 16, wobei das Verhältnis von reaktionsfähigem Verdünnungsmittel zum Alkydharz im Bereich von 2 bis 50: 98 bis 50 Gewichtsanteilen liegt.

## Revendications

1. Utilisation d'un hydrate de carbone modifié avec des acides gras susceptible d'être obtenu par la réaction:
(i) d'au moins un hydrate de carbone ou d'un ester d'acyle de celui-ci; et
(ii) d'un acide gras, d'un ester alkylique de celui-ci ou d'un dérivé de celui-ci,
en tant que diluant réactif dans un revêtement.

2. Utilisation selon la revendication 1, dans laquelle ledit hydrate de carbone modifié avec des acides gras est obtenu par transestérification :
(i) d'au moins un hydrate de carbone; et
(ii) d'un ester alkylique d'acides gras ou d'un dérivé de celui-ci.

3. Utilisation selon la revendication 1, dans laquelle ledit hydrate de carbone modifié avec des acides gras est obtenu par interestérification :
(i) d'au moins un acyle ester d'hydrate de carbone; et
(ii) d'un ester alkylique d'acide gras, ou d'un dérivé de celui-ci.

4. Utilisation selon la revendication 1, dans laquelle ledit hydrate de carbone modifié avec des acides gras est obtenu par estérification
(i) d'au moins un hydrate de carbone; et
(ii) d'un acide gras, ou d'un dérivé de celui-ci.

5. Utilisation selon l'une quelconque des revendications 1 à 4, dans laquelle ledit acide gras est insaturé.

6. Utilisation selon l'une quelconque des revendications 1 à 5, dans laquelle ledit acide gras, l'ester alkylique de celui-ci ou le dérivé de celui-ci a un indice d'iode d'au moins 100.

7. Utilisation selon la revendication 6, dans laquelle ledit acide gras, l'ester alkylique de celui-ci ou le dérivé de celui-ci a un indice d'iode compris entre 100 et 140.

8. Utilisation selon l'une quelconque des revendications 1 à 7, dans laquelle ledit hydrate de carbone ou l'ester d'acyle de celui-ci est composé d'1 à 6 unités d'hydrate de carbone.

9. Utilisation selon l'une quelconque des revendications 1 à 8, dans laquelle ledit hydrate de carbone est choisi parmi le group comprenant l'adonitol, l'arabitol, le sorbitol, le mannitol, le galactitol, l'isomalt, le lactitol, le xylitol, le maltitol, le 1-methyl-glucopyranoside, le 1-methyl-galactopyranoside, le 1-methyl-mannopyranoside, le sucrose, le nystose et le kestose, le trehalose, le raffinose, le gentianose ou un mélange de ceux-ci.

10. Utilisation selon l'une quelconque des revendications 1 à 9, dans laquelle les groupes OH libres de l'hydrate de carbone sont de plus acétylés après réaction avec ledit acide gras, l'ester alkylique de celui-ci ou le dérivé de celui-ci.

11. Utilisation selon l'une quelconque des revendications 1 à 10, dans laquelle ledit hydrate de carbone modifié avec des acides gras présente une viscosité inférieure à 20 dPa.s à 23 °C.

12. Utilisation selon l'une quelconque des revendications 1 à 11, dans une peinture.

13. Utilisation selon l'une quelconque des revendications 1 à 11, dans un vernis.

14. Revêtement comprenant au moins un liant et comme diluent réactif un hydrate de carbone modifié avec des acides gras susceptible d'être obtenu par la réaction:
(i) d'au moins un hydrate de carbone ou d'un ester d'acyle de celui-ci; et
(ii) d'un acide gras, d'un ester alkylique de celui-ci ou d'un dérivé de celui-ci.

15. Revêtement selon la revendication 14, dans lequel les groupes OH libres de l'hydrate de carbone sont de plus acétylés après réaction avec ledit acide gras, l'ester alkylique de celui-ci ou le dérivé de celui-ci.

16. Revêtement selon la revendication 14 ou 15, comprenant :
(i) au moins une résine alkyde conventionnelle siccative ou semi-siccative, semi-grasse ou longue en huile en tant que liant,
(ii) ledit diluent réactif,
(iii) au moins un siccatif.

17. Revêtement selon la revendication 16, dans lequel le rapport entre le diluent réactif et la résine alkyde est compris dans une fourchette allant de 2 à 50 :98 à 50 parties par poids.
